# EUROPEAN PATENT APPLICATION

(11) **EP 4 482 114 A1**
(43) Date of publication of application: **25.12.2024**
(21) Application number: 23756072.7
(22) Date of filing: 18.01.2023
(51) Int. Cl.: H04L 47/263, H04L 12/28, H04L 12/46, H04L 47/127, H04L 47/24, H04L 47/265

(54) **RELAY DEVICE, RELAY METHOD, COMMUNICATION DEVICE, AND COMMUNICATION METHOD**

(30) Priority: 16.02.2022 JP 2022022443
(71) Applicant: DENSO CORPORATION, Kariya-city, Aichi-pref. 448-8661 (JP)
(72) Inventor: NAKATA, Tsuneo, Kariya-city, Aichi-pref. 448-8661 (JP)
(74) Representative: Winter, Brandl - Partnerschaft mbB
(86) International application number: PCT/JP2023/001365
(87) International publication number: WO 2023/157544

(57) **Abstract**

A relay device functions as a relay node (NR) that relays communication between a first network and a second network. The relay node (NR) acquires competition-related information related to a change in a communication competition state among a plurality of communication nodes (Nd) connected to a first network, and transmits state change notification based on the competition-related information to at least one of the plurality of communication nodes (Nd).

## Description

### CROSS REFERENCE TO RELATED APPLICATION

This application is based on Japanese Patent Application No. 2022-022443 on February 16, 2022, and the contents of the original application are incorporated by reference in their entirety.

### TECHNICAL FIELD

The disclosure of this specification relates to a relay device, a relay method, a communication device, and a communication method.

### BACKGROUND ART

Patent Literature 1 discloses an image transmission system in which video signals from a plurality of cameras are encoded by an encoder and transmitted over a network. In the image transmission system of Patent Literature 1, when congestion occurs in the network, the encoder changes the image coding rate of the video signal to a lower rate based on congestion information transmitted from the network.

### RELATED ART LITERATURE

### PATENT LITERATURE

Patent Literature 1: JP 2004-304572 A

### SUMMARY OF THE INVENTION

In Patent Literature 1, after the congestion occurs in the network, the image coding rate is changed based on the congestion information. Therefore, even when it is possible to continue transmission after the congestion occurs, it is difficult to prevent the occurrence of congestion itself.

It is an object of the present disclosure to provide a relay device, a relay method, a communication device, and a communication method capable of preventing the occurrence of congestion.

In order to achieve the above object, according to one aspect of the present disclosure, a relay device relays communication between a first network and a second network, and includes: an information acquisition unit configured to acquire competition-related information related to a change in a competition state of communication by a plurality of communication nodes connected to the first network; and a notification transmission unit configured to transmit state change notification based on the competition-related information to at least one of the plurality of communication nodes.

Further, according to another aspect of the present disclosure, a relay method relays communication between a first network and a second network, and includes steps of: acquiring competition-related information related to a change in a competition state of communication by a plurality of communication nodes connected to the first network; and a notification transmission unit configured to transmit state change notification based on the competition-related information to at least one of the plurality of communication nodes.

Further, according to another aspect of the present disclosure, a communication device is connected to a first network of which communication with a second network is relayed by a relay node, and includes: a data transmission unit configured to transmit data to be relayed to the second network toward the relay node; and a notification acquisition unit configured to acquire, from the relay node, state change notification indicating a change in a competition state of communication by a plurality of communication nodes connected to the first network.

Further, according to another aspect of the present disclosure, a communication method with connection to a first network of which communication with a second network is relayed by a relay node includes steps of: transmitting data to be relayed to the second network toward the relay node; and acquiring, from the relay node, state change notification indicating a change in a competition state of communication by a plurality of communication nodes connected to the first network.

In these aspects, before congestion occurs in the second network, information related to a change in the competition state of communication can be grasped by the communication node or communication device through the state change notification. As a result, even when a plurality of communication nodes are connected to the first network, it is possible to prevent the occurrence of congestion.

The reference numerals in the parentheses in claims are just examples of the correspondence with the specific components in the embodiments described later, and do not limit the scope of the present disclosure.

### BRIEF DESCRIPTION OF THE DRAWINGS

FIG. 1 is a diagram showing an overview of a communication relay system according to an embodiment of the present disclosure.
FIG. 2 is a diagram illustrating a communication scene in which congestion occurs in a comparative example.
FIG. 3 is a block diagram showing a configuration of a relay device.
FIG. 4 is a block diagram showing a configuration of a communication device.
FIG. 5 is a diagram showing an example of a state change notification transmitted to a first transmission node, and the like.
FIG. 6 is a diagram showing an example of acceptance notification transmitted to a second transmission node, and the like.
FIG. 7 is a flowchart showing details of a notification transmission process executed in a relay node.
FIG. 8 is a flowchart showing details of an operation control process executed by the communication device.
FIG. 9 is a sequence diagram showing details of a congestion control process for arbitrating communications among a plurality of communication nodes.

### EMBODIMENTS FOR CARRYING OUT INVENTION

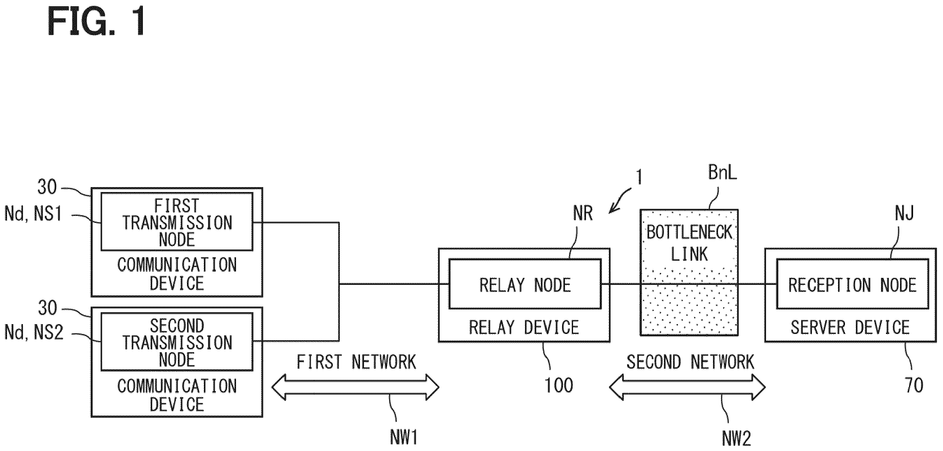

A communication system 1 according to an embodiment of the present disclosure shown in FIG. 1 is a client-side system mounted on a mobile object such as a vehicle. The communication system 1 transmits and receives data to and from a reception node NJ that is located outside the mobile object. The reception node NJ is, for example, a server device 70 provided on a cloud. The communication system 1 includes a communication device 30, a relay device 100, and the like.

The communication device 30 is a communication node Nd connected to the first network NW1. The communication device 30 communicates with the relay device 100 via the first network NW1. A plurality of communication devices 30 are connected to the first network NW1. Each communication device 30 is an element that acts as a client to the server device 70. Each communication device 30, as a communication node Nd, transmits and receives data to and from the reception node NJ.

The first network NW1 is a wired network. At least a part of the first network NW1 may be a wireless network. That is, the first network NW1 may be a combination of a wired network and a wireless network. When the communication system 1 is an in-vehicle system, an in-vehicle LAN (Local Area Network) serves as the first network NW1. For the in-vehicle LAN, a communication standard such as CAN (Controller Area Network, registered trademark) or Ethernet (registered trademark) is adopted. In the first network NW1, communication is carried out using a private IP address.

The relay device 100 is connected to the server device 70 (reception node NJ) via a second network NW2. The relay device 100 functions as a relay node NR that relays communications between the first network NW1 and the second network NW2. The relay device 100 may be capable of communicating with a large number of reception nodes NJ via the second network NW2.

The second network NW2 is a network that corresponds to a WAN (Wide Area Network) side in comparison with the first network NW1, which is a LAN side. The second network NW2 is a communication network that can use the Internet. The second network NW2 includes at least a part of a wireless network. In the second network NW2, communication is carried out using a global IP address. When the communication system 1 is an in-vehicle system, the second network NW2 includes, for example, a section where cellular communication using LTE, 5G, 6G, and the like is performed, or a section where communication using a wireless LAN (for example, Wi-Fi, registered trademark) is performed. The functions of the relay device 100 are implemented in, for example, an in-vehicle unit called a Data Communication Module (DCM).

The second network NW2 includes a wireless network, and therefore has lower communication performance than the first network NW1. Specifically, communication in the second network NW2 is slower than communication in the first network NW1, and is also more likely to experience large delays. Therefore, when data is transmitted and received between the communication node Nd and the reception node NJ, a bottleneck link BnL occurs in the second network NW2. The bottleneck link BnL is a communication section that determines the upper limit of the communication speed between the communication node Nd and the reception node NJ.

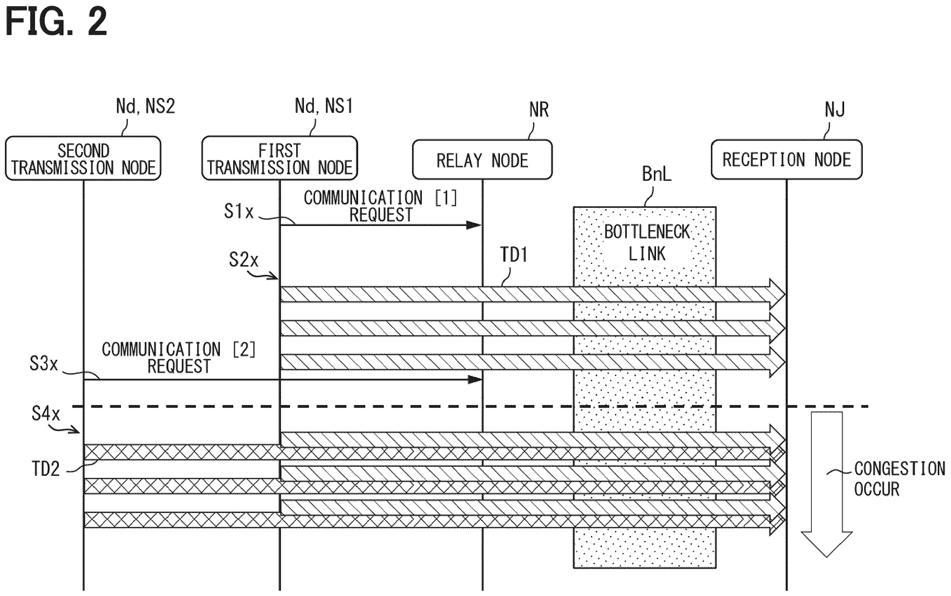

Here, when the communication node Nd communicates with the reception node NJ, congestion may occur in the bottleneck link BnL of the second network NW2. An example of a communication scene in which the congestion occurs in the bottleneck link BnL will be described below based on FIG. 2 with reference to FIG. 1.

When a specific communication node Nd (hereinafter, a first transmission node NS1) communicates with the reception node NJ, it sends a communication request to the relay node NR (see S1x communication [1] request). When there is no other communication node Nd that communicates with the reception node NJ, the first transmission node NS1 starts transmitting data TD1 to the reception node NJ by exclusively using the bottleneck link BnL (S2x).

Furthermore, when a communication node Nd (hereinafter, a second transmission node NS2) other than the first transmission node NS1 communicates with the reception node NJ, it transmits a communication request to the relay node NR, similar to the first transmission node NS1 (see S3x communication [2] request). If a communication request is made by the second transmission node NS2 before the first transmission node NS1 has completed transmitting the data TD1, the second transmission node NS2 transmits the data TD2 in parallel with the first transmission node NS1 transmitting the data TD1 (S4x). In this case, the first transmission node NS1 and the second transmission node NS2 become competing communication nodes Nd. When the total amount of transmission data of the data TD1, TD2 exceeds the capacity of the bottleneck link BnL, the relay node NR will be unable to smoothly transmit the data TD1, TD2 to the reception node NJ. Thus, the congestion occurs in the bottleneck link BnL. When the congestion occurs, it can cause slower communication speeds, increased delays, and connection interruptions.

In order to avoid the occurrence of congestion as described above, the communication system 1 has a competition control function. Hereinafter, configurations of the relay device 100 and the communication device 30 and a congestion control function in the communication system 1 will be described in detail with reference to FIGS. 1, 3 and 4.

### (Relay device)

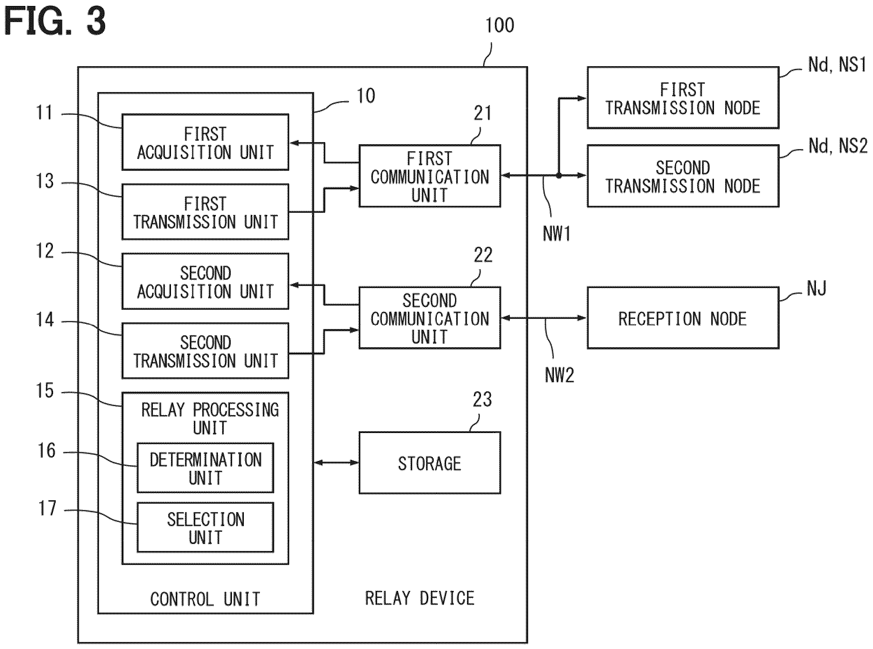

The relay device 100 includes a first communication unit 21, a second communication unit 22, a storage 23, and a control unit 10 (see FIG. 3). The first communication unit 21 is a wired communication interface that communicates with the plurality of communication nodes Nd (communication devices 30) via the first network NW1. The second communication unit 22 is a wireless communication interface that communicates with at least one reception node NJ (server device 70) via the second network NW2. The storage 23 is a non-volatile memory such as a flash memory. The storage 23 stores a program (relay program) executed by the control unit 10 and data for a relay process.

The control unit 10 includes a first acquisition unit 11, a second acquisition unit 12, a first transmission unit 13, a second transmission unit 14, and a relay processing unit 15 (see FIG. 3). These elements may be provided as hardware, or may be functional units constructed by software (relay program).

The first acquisition unit 11 cooperates with the first communication unit 21 to grasp the communication state of the first network NW1 and acquire information from the first network NW1. The first acquisition unit 11 acquires, from the communication node Nd connected to the first network NW1, a communication request for requesting data relay to the second network NW2, and transmission data to be relayed to the second network NW2, and the like. In addition, the first acquisition unit 11 acquires competition-related information and priority information.

The competition-related information is information related to a change in a competition state of communication among the plurality of communication nodes Nd connected to the first network NW1. A state in which the communication competition occurs is a state in which the plurality of communication nodes Nd transmit transmission data relayed to the second network NW2 in parallel. The change in the competition state includes an increase or decrease (appearance or disappearance) of the communication nodes Nd in the competition state, and a change in the communication quality required by the communication nodes Nd in the competition state. Therefore, the competition-related information includes change detection information that detects an increase or decrease in the number of communication nodes Nd in the competition state or a change in the communication quality requirements, and change prediction information that predicts an increase or decrease in the number of communication nodes Nd or a change in the communication quality requirements.

As described above, the change detection information is information for detecting a change in the competition state. The change detection information includes a communication request notification that requests the start of communication with the reception node NJ, a communication end notification that indicates the completion of communication with the reception node NJ, and the like. In addition, the change detection information includes request quality information. The request quality information is information indicating the communication quality that the communication node Nd requests of the relay node NR. Furthermore, when the communication quality requested for communication is changed in the communication node Nd, new request quality information indicating the changed communication quality is acquired by the first acquisition unit 11 as the change detection information. As an example, when the request bandwidth is changed from 5 Mbps to 10 Mbps, the updated request quality information is notified to the first acquisition unit 11.

As described above, the change prediction information is information for predicting the change in the competition state. The change prediction information includes a notification of the occurrence of an event that leads to the occurrence of communication with the second network NW2. The first acquisition unit 11 acquires a notification of the occurrence of a preset event as change prediction information. The node that is the transmission source of the event occurrence notification does not have to be the communication node Nd that transmits data to the reception node NJ, that is, the communication node Nd that causes competition. When the communication system 1 is an in-vehicle system, for example, an airbag deployment notification and an SOS call switch ON operation notification are set in advance as event occurrence notifications corresponding to the change prediction information. After the occurrence of these events, a call is made to a call center as a high-priority external communication.

The priority information is information that indicates the priority set for communication. The priority is a relative index that is predefined in the communication system 1 and is not changed in principle. In the case where the competition occurs between the plurality of communication nodes Nd, data associated with a high priority level is preferentially relayed to the second network NW2 in the relay node NR. The priority may be set for each communication node Nd, or may be set for each application running on the communication node Nd. Further, the priority may be set in association with each individual communication. The priority information may be provided from the communication node Nd to the first acquisition unit 11, or may be acquired by a process of reading out the priority according to the communication request source from a table prepared in advance or the like. In the communication system 1 in which the priority defined for each communication node Nd or each application is changeable, the priority information may be treated as information included in the competition-related information.

The second acquisition unit 12 cooperates with the second communication unit 22 to grasp the communication state of the second network NW2 and acquire information from the second network NW2. The second acquisition unit 12 acquires transmission data transmitted from a node connected to the second network NW2 to the communication node Nd of the first network NW1. In addition, the second acquisition unit 12 acquires communication state information indicating the state of communication in the second network NW2. For example, in a state where the plurality of communication nodes Nd are transmitting data to the reception node NJ, when the communication speed of the second network NW2 (bottleneck link BnL) decreases, the competition state may change. Therefore, the communication state information is obtained as the competition-related information.

The communication state information includes information indicating the type of the bottleneck link BnL, and information indicating the communication speed and delay time of the bottleneck link BnL (second network NW2). In addition, information indicating jitter and packet loss occurring in the second network NW2 may be acquired as the communication state information. Further, by combining the position information of the vehicle equipped with the communication system 1 with a radio wave map prepared in advance, information predicting a change in the communication state may be acquired as the communication state information.

The first transmission unit 13 cooperates with the first communication unit 21 to output information to the first network NW1. The first transmission unit 13 transmits the transmission data received by the second acquisition unit 12 to the communication node Nd of the first network NW1. The first transmission unit 13 cooperates with the second acquisition unit 12 to relay data from the second network NW2 to the first network NW1. In addition, the first transmission unit 13 transmits an acceptance notification and a state change notification to the communication node Nd.

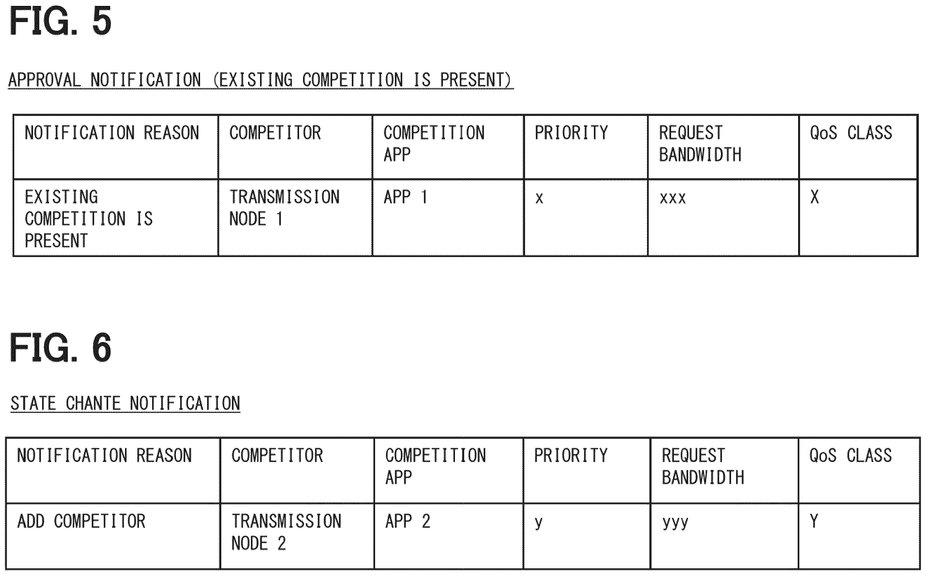

The approval notification is transmitted as a reply to the communication request to the communication node Nd which is the source of the communication request. The approval notification is notification that permits the start of data transmission to the reception node NJ. When there is no competing communication node Nd, the approval notification indicating that there is no competition is transmitted to the requesting communication node Nd. On the other hand, when the competing communication node Nd exists, approval notification (see FIG. 5) including information on the existing competition is transmitted to the requesting communication node Nd.

A state change notification (see FIG. 6) is transmitted to at least one communication node Nd in the competition state based on the competition-related information acquired by the first acquisition unit 11 or the second acquisition unit 12. The state change notification is intended to inform the existing communication nodes Nd of an increase or decrease (addition or reduction) in the number of competing communication nodes Nd, a change in the communication quality requested by the competing communication nodes Nd, and the occurrence or cancellation of the competition state due to a change in the state of the second network NW2.

Specifically, the approval notification and the state change notification including information on the existing competition include information on a reason for the notification, a competition party, a competition application, the priority, the request bandwidth, and the QoS (Quality of Service) class. In the case of the approval notification (see FIG. 5), the reason for the notification is described as "existing competition exists". The competitor and competition application include information for identifying the communication node Nd and the application that have already transmitted data to the reception node NJ. In the priority field, a value (priority information) indicating a priority set in advance for the competitor or the competition application is described. The request bandwidth and QoS class include information (request quality information) indicating the communication quality required by the competitor or a competition application. When there are multiple existing competitions, information about all existing competitions is provided by the approval notification.

On the other hand, in the case of a state change notification (see FIG. 6), the notification reason describes content based on the competition-related information, such as "competition addition" and "decrease in communication speed of the second network". The competitor and competition application include information for identifying the communication node Nd or application (change source) that has been added or whose request communication quality has been changed. In the priority field, a value indicating the priority set in advance for the competitor or the competition application which has been added or of which change has been requested is described. The request bandwidth and the QoS class include information indicating the latest communication quality requested by the competitor or the competition application. In the case of the state change notification based on the communication state information of the second network NW2, information such as the competitor, the competition application, the priority, the request bandwidth, the QoS class, or information excluding the reason for the notification overlaps with information that has already been notified, and therefore does not need to be notified again.

The second transmission unit 14 cooperates with the second communication unit 22 to output information to the second network NW2. The second transmission unit 14 transmits the transmission data received by the first acquisition unit 11 to the reception node NJ of the second network NW2. The second transmission unit 14 cooperates with the first acquisition unit 11 to relay data from the first network NW1 to the second network NW2.

The relay processing unit 15 executes the data relay process between the first network NW1 and the second network NW2. The relay processing unit 15 controls the transmission and reception of data so as to satisfy the communication quality requested for the data relay, based on the request quality information. In addition, the relay processing unit 15 generates the approval notification and the state change notification based on the competition-related information and the like. The relay processing unit 15 has a determination unit 16 and a selection unit 17 as functional units related to the transmission of the acceptance notification and the state change notification.

The determination unit 16 determines whether the competition state changes based on the competition-related information acquired by the first acquisition unit 11 and the second acquisition unit 12. Specifically, the determination unit 16 uses the above-described change detection information, change prediction information, communication state information, and the like to determine whether the competition state changes.

The selection unit 17 sets the communication node Nd (notification target node) to which the approval notification and the state change notification are to be transmitted. For example, when a communication node Nd (addition node) that transmits data to the reception node NJ is added, the selection unit 17 selects a notification target node from among other communication nodes Nd that are currently transmitting data to the reception node NJ. Specifically, the selection unit 17 selects, as the notification target nodes, the communication node Nd having the same communication priority as the addition node and the communication node Nd having a lower communication priority than the addition node.

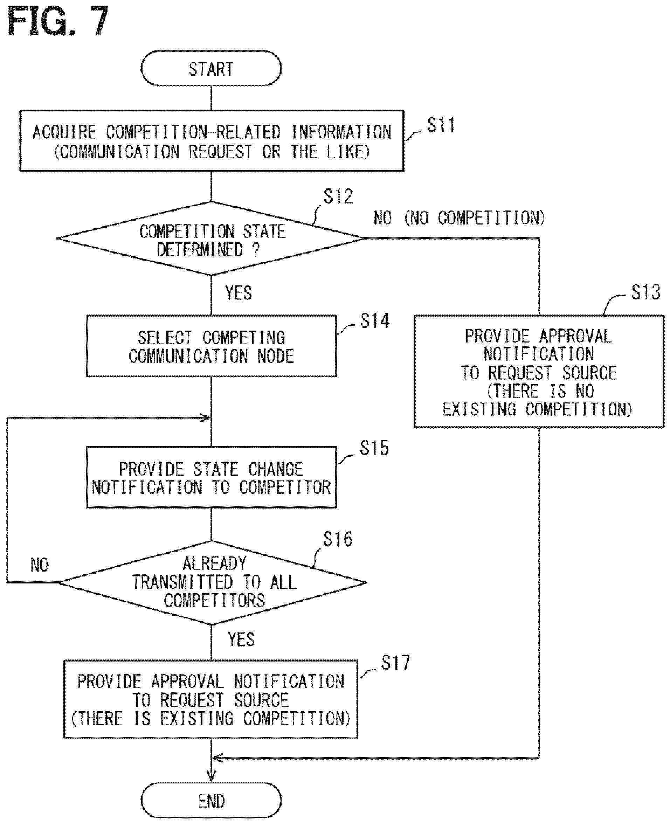

The relay device 100 described above sequentially transmits the approval notification and the state change notification by executing the notification transmission process (see FIG. 7) in the control unit 10. The notification transmission process starts based on the reception of competition-related information including a notification of the communication request during a period in which the relay device 100 functions as the relay node NR.

In S11 of the notification transmission process, the competition-related information that triggered the start of the notification transmission process is acquired, and the process proceeds to S12. In S12, the determination unit 16 determines whether the competition state exists. Specifically, in S12, in addition to determining whether a new competition state occurs, it is also determined whether the existing competition state changes. When it is determined in S11 that a new communication request has been acquired and also in S12 that no competition state has occurred, the process proceeds to S13. In S13, the approval notification indicating that no competition exists is transmitted to the communication node Nd which is the request source of the communication request, and the notification transmission process ends.

On the other hand, when it is determined in S12 that the new competition state occurs or that the competition state changes, the process proceeds to S14. In S14, the selection unit 17 selects the competing communication node Nd (competitor) as the notification target node based on the priority information, and the process proceeds to S15. In S15, the state change notification (see FIG. 6) based on the competition-related information acquired in S11 is transmitted to the notification target node (competitor communication node Nd) selected in S14, and the process proceeds to S16.

In S16, it is determined whether the competition-related information has been transmitted to all of the notification target nodes selected in S14. When the plurality of notification target nodes are selected, the competition-related information is transmitted to all the notification target nodes by repeating S15 and S16. Then, when it is determined in S16 that transmission to all transmission target nodes has been completed, the process proceeds to S17. When the new communication request has been acquired in S11, in S17, the approval notification (see FIG. 5) including information on the existing competition is transmitted to the communication node Nd that has made the communication request, and the current notification transmission process ends. In addition, when the change in the competition state occurs that does not involve the addition of the competing communication node Nd, the notification in S17 may be omitted.

### (Communication device)

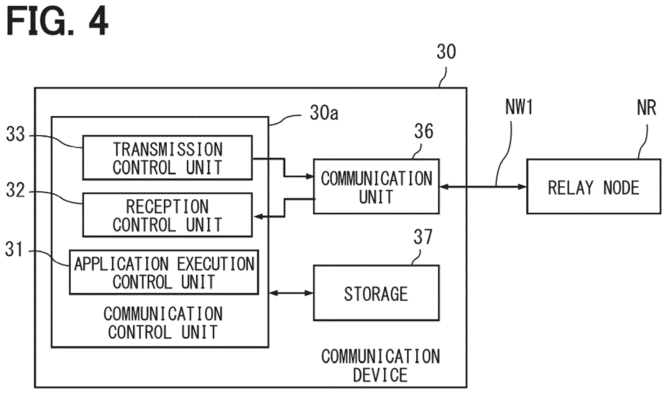

The communication device 30 includes a communication unit 36, a storage 37, and a communication control unit 30a (see FIG. 4). The communication unit 36 is a wired communication interface that communicates with the relay node NR and other communication nodes Nd via the first network NW1. The storage 37 is a non-volatile memory such as a flash memory. The storage 37 stores programs (communication programs) executed by the communication control unit 30a and data for a communication process.

The communication control unit 30a includes an application execution unit 31, a reception control unit 32, and a transmission control unit 33 (see FIG. 4). These elements may be provided as hardware, or may be functional units constructed by software (communication programs).

The application execution unit 31 executes an application program to cause the communication device 30 to function as a predetermined in-vehicle device. The application execution unit 31 determines whether to transmit data to the reception node NJ as necessary. When transmitting data to the reception node NJ, the application execution unit 31 determines the communication quality required for the relay node NR, specifically, the communication speed to be ensured and the allowable delay time, and the like. The application execution unit 31 defines the request bandwidth, the QoS class, and the like so as to ensure the communication speed and delay time. The application execution unit 31 can improve the communication speed and delay time of the relay process by the relay node NR by changing the settings of the request bandwidth and the QoS class to higher values. The application execution unit 31 at least defines a desirable communication quality and a minimum communication quality that needs to be ensured according to the type of data to be transmitted.

The reception control unit 32 cooperates with the communication unit 36 to acquire information from the first network NW1. The reception control unit 32 receives the acceptance notification and the state change notification from the relay node NR. Based on the acceptance notification, the reception control unit 32 determines whether there is the competing existing communication node Nd. The reception control unit 32 grasps the change in the competition state of the first network NW1 based on the state change notification. As described above, the state change notification includes priority information indicating the priority of communication of other communication nodes Nd competing with the communication device 30 (own node), request quality information, and the like (see FIG. 6).

The transmission control unit 33 cooperates with the communication unit 36 to output information to the first network NW1. The transmission control unit 33 transmits a notification of the communication request to the relay node NR. In addition, the transmission control unit 33 transmits, to the relay node NR, identification information for identifying the application being executed in the own node, the request quality information indicating the communication quality requested by the own node, and the like. The transmission control unit 33 may further transmit priority information of the own node or application.

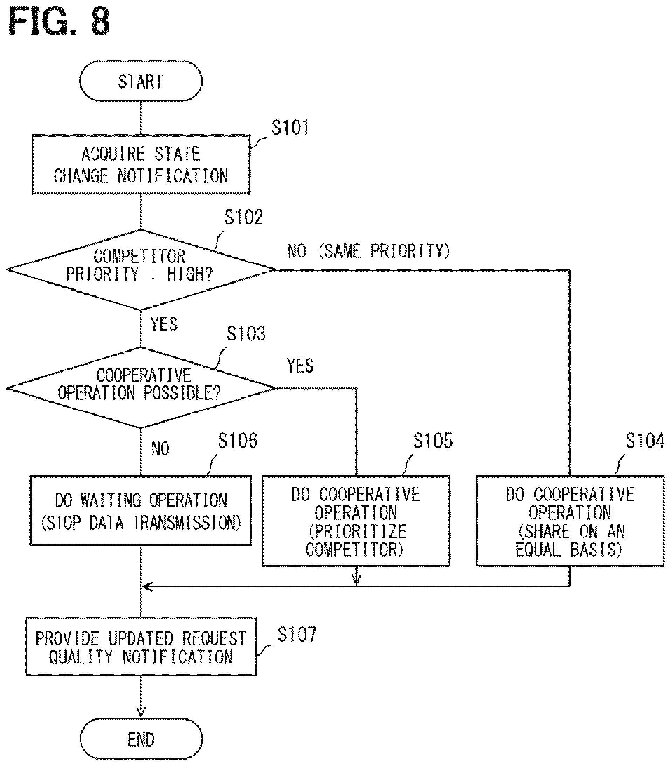

In the communication device 30 described above, when the reception control unit 32 receives the state change notification during the period of data transmission to the reception node NJ, the communication control unit 30a executes an operation control process (see FIG. 8) to change the data transmission operation. The operation control process will now be described in detail.

In S101 of the operation control process, the reception control unit 32 receives the state change notification. In S101, the priority information of the communication node Nd (competitor) described in the acquired state change notification and the request quality information of the competitor are obtained, and the process proceeds to S102. In S102, the transmission control unit 33 compares the priority of the communication of the own node with the priority of the communication of the competing node. The transmission control unit 33 changes the data transmission operation in steps S104 to S106 depending on the relationship between the two priorities.

When it is determined in S102 that the priority of the competing node is the same as that of the own node, the process proceeds to S104. In S104, the transmission control unit 33 determines to perform data transmission through a cooperative operation. In this case, in S107, the transmission control unit 33 changes the communication quality required by its own node to the same level as the communication quality required by the competitor, based on the state change notification. The transmission control unit 33 changes the request bandwidth to counter delays, changes the QoS class (policy), and the like. Then, the node NR transmits request quality information indicating the updated communication quality to the relay node NR. As a result, the communication capacity of the bottleneck link BnL is shared equally between the node itself and the competitor.

The transmission control unit 33 may change the communication quality required by its own node to be lower than that of the competing node. In this case, the updated request quality information is notified to the competitor, and the request communication quality of the competitor is adjusted to the same level as that of the own node. As a result, the communication capacity of the bottleneck link BnL may be shared equally by the node itself and the competitor.

On the other hand, when it is determined in S102 that the priority of the competing node is higher than the own node, the process proceeds to S103. In S103, the transmission control unit 33 determines whether data transmission through cooperative operation can be continued. For example, when the priority of the competing node is significantly higher than the priority of the own node, or when the communication quality of the bottleneck link BnL is extremely degraded, it is determined in S103 that the cooperative operation is impossible, and the process proceeds to S106.

In S106, the transmission control unit 33 determines to perform a standby operation. In this case, the transmission of data toward the reception node NJ is temporarily stopped. When a state change notification indicating the disappearance of the competing node is acquired, the transmission control unit 33 ends the standby operation and resumes data transmission to the reception node NJ.

On the other hand, when it is determined in S103 that cooperative operation is possible, the process proceeds to S105. In S105, the transmission control unit 33 determines to perform data transmission through cooperative operation with priority given to the competing party. In this case, in S107, the transmission control unit 33 changes the request communication quality of the own node to a value lower than the request communication quality of the competing node, and transmits the updated request quality information toward the relay node NR. Based on the above, the communication capacity of the bottleneck link BnL is shared between the competitor and the own node, with priority given to the competitor.

Note that even in a case where it is decided to perform a cooperative operation in S104 or S105, when the minimum required communication quality defined by the application executing unit 31 cannot be ensured, the transmission control unit 33 can perform switching to the standby operation.

### (Congestion control process)

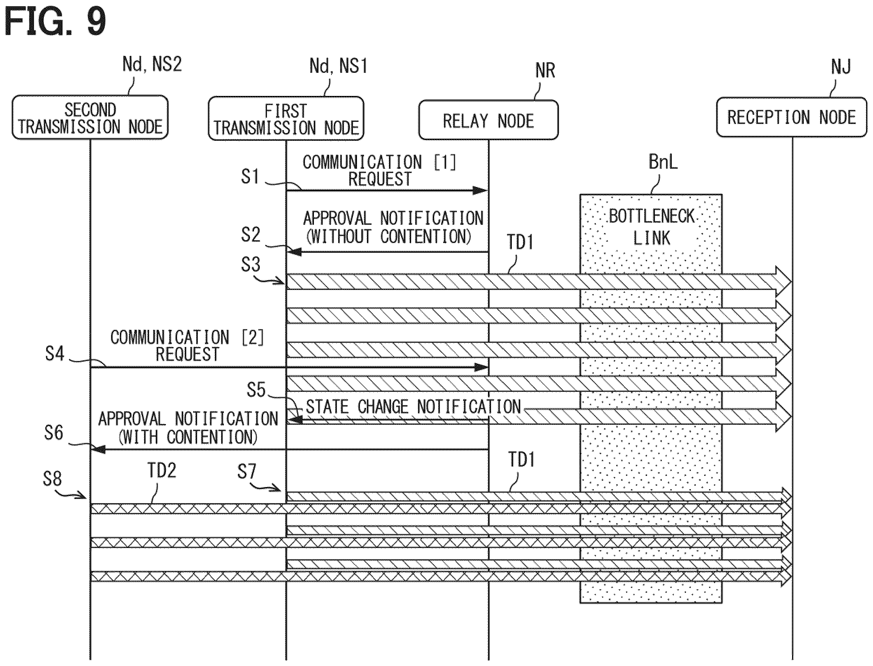

Next, in the communication system 1 described so far, using an example communication scene in which two communication nodes Nd sequentially start transmitting data to the reception node NJ, the details of a series of congestion control processes in which these data communications are arbitrated will be described based on FIG. 9. In the following description, as in the comparative example, the communication node Nd that first starts data transmission is referred to as a "first transmission node NS1", and another communication node Nd that starts data transmission after the first transmission node NS1 is referred to as a "second transmission node NS2". The second transmission node NS2 corresponds to the addition node described above.

The first transmission node NS1 transmits a communication request toward the relay node NR (see S1 communication [1] request). In addition to the communication request, the first transmission node NS1 transmits the request quality information indicating a desired communication quality determined by the application execution unit 31 to the relay node NR. When there is no other communication node Nd that communicates with the reception node NJ, the relay node NR transmits, to the first transmission node NS1, the approval notification indicating that there is no competition (S2).

Based on receipt of the approval notification from the relay node NR, the first transmission node NS1 starts transmitting the data TD1 to be relayed to the second network NW2, toward the relay node NR (S3). The relay node NR receives the data TD1 from the first transmission node NS1 and transmits the data TD1 to the reception node NJ at a communication speed and delay time that satisfies the communication quality requested by the first transmission node NS1.

After the first transmission node NS1 starts transmitting data, the second transmission node NS2 transmits the communication request to the relay node NR (see S4 communication [2] request). Similarly to the first transmission node NS1, the second transmission node NS2 also transmits request quality information indicating the desired communication quality determined by the application execution unit 31 to the relay node NR together with notification of the communication request.

The relay node NR compares the priority of the communication of the first transmission node NS1 with the priority of the communication of the second transmission node NS2. When the priority of the added second transmission node NS2 is equal to or higher than the priority of the first transmission node NS1, the relay node NR transmits the state change notification toward the first transmission node NS1 (S5).

The first transmission node NS1 changes the communication quality required for the communication node Nd based on the state change notification. Specifically, the first transmission node NS1 grasps the priority of the communication of the competing second transmission node NS2 from the priority information attached to the state change notification based on the above-described operation control process. The first transmission node NS1 changes its transmission operation to standby operation, the cooperative operation, or the like, depending on the relationship between the priority of communication by the own node and the priority of communication by the second transmission node NS2 (see S104 to S106 in FIG. 8). As a result, the first transmission node NS1 can continue transmitting the data TD1, for example, in a state where the requested communication quality is appropriately lowered or the like (S7). At this time, the first transmission node NS1 may notify the relay node NR of the changed request quality information (see S107 in FIG. 8).

Further, based on the request quality information of the competing second transmission node NS2, the first transmission node NS1 may perform a change to a higher QoS class to prevent delays, or may perform a change to a cheaper QoS class to avoid a deterioration in the performance-cost ratio. Furthermore, when the priority of the second transmission node NS2 is lower than the priority of the first transmission node NS1, the transmission of a state change notification to the first transmission node NS1 is not implemented. In this case, the first transmission node NS1 continues transmitting the data TD1 without changing its transmission operation.

After transmitting the state change notification to the first transmission node NS1, the relay node NR transmits the approval notification (see FIG. 5) including information on the existing competitor (first transmission node NS1) to the second transmission node NS2 (S6). The relay node NR may include the initial request quality information of the first transmission node NS1 in the acceptance notification, or may include updated request quality information based on the state change notification in the approval notification.

The second transmission node NS2 grasps the priority of the first transmission node NS1 attached to the acceptance notification, and determines the transmission operation according to the relationship between the communication priority of its own node and the communication priority of the first transmission node NS1. When the second transmission node NS2 determines the execution of the cooperative operation, it refers to the request quality information of the first transmission node NS1 and changes the communication quality that the own node requests. As a result, the second transmission node NS2 starts transmitting data TD2 with the requested communication quality lowered from the desired communication quality (S8). The second transmission node NS2 may notify the relay node NR of the changed request quality information. At this time, the relay node NR may transmit the updated request quality information of the second transmission node NS2 to the first transmission node NS1.

### (Summary of present embodiment)

According to the present embodiment described so far, information related to a change in the competition state of communication can be grasped by the communication node Nd through the state change notification before the congestion occurs in the second network NW2. As a result, even when the plurality of communication nodes Nd are connected to the first network NW1, it is possible to prevent the occurrence of congestion.

Specifically, according to the above-described congestion control process (see FIG. 9), the first transmission node NS1 and the second transmission node NS2, which are in the competition state, become aware of each other's existence through the competition state notification and the approval notification, and then transmit data TD1 and TD2 to the reception node NJ. As a result, the first transmission node NS1 and the second transmission node NS2 can each transmit data in a manner that does not cause congestion in the bottleneck link BnL, and therefore can appropriately share the communication capacity of the bottleneck link BnL. As a result, it is possible to prevent the occurrence of congestion.

Additionally, in the present embodiment, communication state information indicating the state of communication of the second network NW2 is used by the determination unit 16 to determine whether the competition state changes. Therefore, even in a case where the communication state of the second network NW2 fluctuates due to, for example, installation of the communication system 1 in a mobile object, arbitration of communication between the plurality of communication nodes Nd functions. It is possible to avoid the congestion occurrence.

In this embodiment, priority information indicating the priority to be set for the communication of the second transmission node NS2 is acquired by the relay node NR. Then, the state change notification including the priority information of the second transmission node NS2 is transmitted from the relay node NR to the first transmission node NS1. Therefore, even when the congestion control function is distributed from the relay node NR to each communication node Nd, the first transmission node NS1 can grasp the importance of the data transmitted by the second transmission node NS2 and appropriately change the transmission operation of its own node. As a result, data transmission that effectively utilizes the capacity of the bottleneck link BnL can be implemented while preventing the occurrence of congestion.

Further, in the present embodiment, among the plurality of communication nodes Nd, the communication node Nd having a communication priority equal to or lower than that of a specific communication node Nd is selected as the notification target node. Then, the first transmission unit 13 transmits the state change notification including priority information to the selected notification target node. As described above, when the destination of the state change notification is determined based on the priority, the transmission operation of the communication node Nd related to the competition is adjusted to avoid the congestion only. Therefore, even when the congestion control function is distributed to each communication node Nd, it is possible to smoothly perform arbitration of data transmission without increasing the processing load of the communication node Nd that transmits data of high importance.

Additionally, in the present embodiment, request quality information indicating the communication quality required by the communication node Nd is acquired as the competition-related information by the relay node NR. Then, for example, in a communication scene in which the second transmission node NS2 is added, the first transmission unit 13 transmits the state change notification based on the request quality information of the second transmission node NS2 to the first transmission node NS1, which is the existing communication node Nd. Therefore, the first transmission node NS1 can change the communication quality required by itself in a timely and appropriate manner based on the content of the state change notification in accordance with changes in the competition state. As a result, the first transmission node NS1 and the second transmission node NS2 can appropriately share the capacity of the bottleneck link BnL while avoiding the occurrence of congestion by changing their respective transmission operations.

In addition, in the present embodiment, when the request quality information of the communication node Nd is changed, the relay node NR transmits the state change notification based on the changed request quality information to the communication node Nd other than the communication node Nd whose request quality information was changed. For example, when the request quality information of the first transmission node NS1 is changed, the relay node NR transmits a state change notification based on the request quality information after the change to the second transmission node NS2. According to the above, the first transmission node NS1 and the second transmission node NS2 can grasp each other's requested communication quality and appropriately adjust the transmission operation of their own nodes. As a result, the first transmission node NS1 and the second transmission node NS2 can perform efficient data transmission while avoiding the occurrence of congestion in the bottleneck link BnL.

Further, in the present embodiment, change prediction information for predicting the change in the competition state is acquired as the competition-related information. Then, the state change notification based on the change prediction information is transmitted to the communication node Nd connected to the first network NW1. According to the above, in the communication scene in which the communication node Nd is added, for example, the change in the transmission operation of the existing communication node Nd can be implemented before new traffic occurs. As a result, it is possible to smoothly start data transmission of high importance, such as communication related to an SOS call.

In addition, in the communication node Nd of the present embodiment, the communication quality required of the relay node NR is changed based on the state change notification. Therefore, even when the congestion control function is distributed from the relay node NR to each communication node Nd, it is possible to appropriately reduce the amount of data transmitted from each communication node Nd. As a result, the capacity of the bottleneck link BnL is appropriately shared by the plurality of communication nodes Nd while avoiding the occurrence of congestion.

Further, in the present embodiment, the state change notification provided to the first transmission node NS1 includes priority information indicating the priority of the communication of the second transmission node NS2 that competes with the first transmission node NS1. Then, in the first transmission node NS1, the transmission operation is changed according to the relationship between the priority of the communication by the first transmission node NS1 and the priority of the communication by the second transmission node NS2. As described above, the first transmission node NS1 is able to grasp the importance of the data transmitted by the second transmission node NS2 and appropriately change the transmission operation of the first transmission node NS1. As a result, data transmission that effectively utilizes the capacity of the bottleneck link BnL can be implemented while preventing the occurrence of congestion.

In the above-described embodiment, the first acquisition unit 11 and the second acquisition unit 12 correspond to an "information acquisition unit", the first transmission unit 13 corresponds to a "notification transmission unit", the reception control unit 32 corresponds to a "notification acquisition unit", and the transmission control unit 33 corresponds to a "data transmission unit". Further, the first transmission node NS1 corresponds to a "notification target node" and an "own node", and the second transmission node NS2 corresponds to a "specific communication node" and a "competition node".

### (Other embodiments)

Although the embodiment of the present disclosure has been described above, the present disclosure should not be construed as being limited to the above embodiment, and can be applied to various embodiments and combinations within the scope not departing from the gist of the present disclosure.

In the above-described embodiment, the relay node NR acquires the request bandwidth and QoS class from the specific communication node Nd as the competition-related information, incorporates this information into the state change notification, and provides it to other communication nodes Nd. However, the manner of the state change notification based on the competition-related information is not limited to the above. For example, the relay node NR may specify the communication quality of each communication node Nd and request adjustment to the specified communication quality by the state change notification.

More specifically, in a first modification of the above-described embodiment, the relay node NR refers to the request bandwidth and QoS class acquired from the specific communication node Nd, and sets the request bandwidth and QoS class to be proposed to other communication nodes Nd. The relay node NR transmits the state change notification including the set request bandwidth and QoS class to the other communication nodes Nd. The other communication nodes Nd refer to the received state change notification and reflect the request bandwidth and QoS class proposed by the relay node NR in the data transmission by the own node.

Also, in a second modification of the above-described embodiment, the relay node NR incorporates the request bandwidth and QoS class acquired from the specific communication node Nd into the first state change notification transmitted to other communication nodes Nd, as in the above-described embodiment. Thereafter, when the arbitration between the communication nodes Nd is not successful and congestion occurs in the bottleneck link BnL, the relay node NR sets the request bandwidth and QoS class to be proposed to the communication nodes Nd in the competition state, and requests each communication node Nd to change its data transmission operation.

Furthermore, the state change notification in a third modification of the above-described embodiment includes only the notification reason, the competitor, and the competition application. That is, the priority information and request quality information of the competing party are omitted from the state change notification. In addition, when the priority of communication is defined not on an application basis but on a basis of the communication node Nd, information on competition applications may also be deleted from the state change notification. Further, the communication quality of each communication may be defined by an index other than the request bandwidth and the QoS class.

In the above-described embodiment, when another traffic (see data TD2 in FIG. 9) having a priority equal to or higher than that of the existing communication node Nd occurs, the change in the competition state is notified to the existing communication node Nd by the state change notification. However, the trigger for transmitting the state change notification may be changed as appropriate. For example, in a fourth modification of the above-described embodiment, the relay node NR transmits the state change notification only when it is expected that the competition state will worsen.

In a fifth modification of the above embodiment, only the state change notification related to the increase or decrease in the number of communication nodes Nd is transmitted. That is, the state change notification related to the change in the request quality information and the state change notification related to the change in the communication state of the second network NW2 are not transmitted.

In the above-described embodiment, the priority of the communication node Nd to be added is used as a standard, and the relay node NR transmits the state change notification to communication nodes Nd having the priority equal to or lower than this priority. However, the selection of notification target nodes based on priority may be omitted. For example, in a sixth modification of the above-described embodiment, the relay node NR transmits the state change notification to all communication nodes Nd that are transmitting data to the reception node NJ, regardless of the priority. According to the above, the processing load on the relay node NR can be further reduced.

In the above embodiment, the process of preventing congestion of the data TD1, TD2 transmitted from the plurality of communication nodes Nd to the reception node NJ has been described. However, the relay node NR may implement control to avoid congestion of data transmitted from the server device 70 to the plurality of communication nodes Nd. In this case, each communication node Nd changes the communication quality required for the reception data based on the state change notification. As a result, for example, the bit rate of reception data of video content can be adjusted to a lower value. Thereby, it is possible to prevent a significant deterioration in the user experience.

In a seventh modification of the above-described embodiment, the second network NW2 is also a private network like the first network NW1. As in the seventh modification, the relay node NR may be an element that relays communications between different private networks. Furthermore, the communication system 1 is not limited to being mounted on the mobile object, but may be used within a specific facility.

In the above-described embodiment, the functions provided by the relay device 100 and the communication device 30 can be provided by software and hardware that executes the software, software alone, hardware alone, or a complex combination of these. Further, when such functions are provided by electronic circuits as hardware, each function can be provided by a digital circuit including a large number of logic circuits, or an analog circuit.

Each control unit 10, 30a of the above embodiments includes a processing unit coupled to a RAM. The processing unit is hardware for arithmetic processing, and is the main component of a computer that executes a program to implement the relay method and communication method according to the present disclosure. Such a processing unit includes at least one arithmetic core such as a central processing unit (CPU) and a graphics processing unit (GPU). The processing unit may further include a field-programmable gate array (FPGA), a neural network processing unit (NPU), an IP core having another dedicated function, and the like. The processing unit may be configured to be individually mounted on a printed circuit board, or may be configured to be mounted on an application specific integrated circuit (ASIC), an FPGA, or the like. Further, each storage 23, 37 is not limited to being provided on a circuit board, but may be provided in the form of a memory card or the like, inserted into a slot portion, and electrically connected to the processing circuit of each control unit 10, 30a.

The control unit and the method thereof described in the present disclosure may be implemented by a special purpose computer, which includes a processor programmed to execute one or more functions performed by computer programs. Alternatively, the device and the method thereof according to the present disclosure may be implemented by a dedicated hardware logic circuit. Alternatively, the device and the method thereof according to the present disclosure may be implemented by one or more dedicated computers implemented by a combination of a processor that executes a computer program and one or more hardware logic circuits. The computer program may be stored in a computer readable non-transitory tangible storage medium as computer-executable instructions.

## Claims

1. A relay device that relays communication between a first network (NW1) and a second network (NW2), the device comprising:
an information acquisition unit (11, 12) configured to acquire competition-related information related to a change in a competition state of communication by a plurality of communication nodes (Nd) connected to the first network; and
a notification transmission unit (13) configured to transmit state change notification based on the competition-related information to at least one of the plurality of communication nodes.

2. The relay device according to claim 1, further comprising
a determination unit (16) configured to determine whether the competition state changes,
wherein
the information acquisition unit is configured to acquire communication state information indicating a communication state of the second network, and
the determination unit is configured to use the communication state information to determine whether the competition state changes.

3. The relay device according to claim 1 or claim 2, wherein
the information acquisition unit is configured to acquire priority information indicating a priority set for communication of the communication node, and
the notification transmission unit is configured to transmit the state change notification including the priority information of a specific communication node (NS2) that is one of the plurality of communication nodes to a communication node other than the specific communication node.

4. The relay device according to claim 3, further comprising
a selection unit (17) configured to select, among the plurality of communication nodes other than the specific communication node, a communication node having a same communication priority as the specific communication node or a lower communication priority than the specific communication node, as a notification target node (NS1), and
the notification transmission unit is configured to transmit the state change notification including the priority information to the notification target node selected by the selection unit.

5. The relay device according to claim 1 or claim 2, wherein
the information acquisition unit is configured to acquire, as the competition-related information, request quality information indicating a communication quality required by the communication node, and
the notification transmission unit is configured to transmit the state change notification based on the request quality information of a specific communication node (NS2) that is one of the plurality of communication nodes to a communication node other than the specific communication node.

6. The relay device according to claim 5, wherein
when the request quality information is changed, the notification transmission unit transmits the state change notification based on the changed request quality information to a communication node other than a communication node in which the request quality information has been changed.

7. The relay device according to any one of claims 1 to 6, wherein
the information acquisition unit is configured to acquire, as the competition-related information, change prediction information for predicting a change in the competition state, and
the notification transmission unit is configured to transmit the state change notification based on the change prediction information to a communication node currently connected to the first network.

8. A relay method that relays communication between a first network (NW1) and a second network (NW2), the method comprising steps of:
acquiring competition-related information related to a change in a competition state of communication by a plurality of communication nodes (Nd) connected to the first network (S4, S11); and
transmitting state change notification based on the competition-related information to at least one of the plurality of communication nodes (S6, S15).

9. A communication device connected to a first network (NW1) of which communication with a second network (NW2) is relayed by a relay node (NR), the device comprising:
a data transmission unit (33) configured to transmit data (TD1) to be relayed to the second network toward the relay node; and
a notification acquisition unit (32) configured to acquire, from the relay node, state change notification indicating a change in a competition state of communication by a plurality of communication nodes (Nd) connected to the first network.

10. The communication device according to claim 9, wherein
the data transmission unit changes a communication quality requesting the relay node based on the state change notification.

11. The communication device according to claim 9 or claim 10, wherein
the state change notification includes priority information indicating a priority of communication between an own node (NS1) and a competing node (NS2) that competes with the own node (NS1), and
the data transmission unit changes a transmission operation of the data depending on a relationship between a priority of communication by the own node and a priority of communication by the competing node.

12. A communication method that connects a first network (NW1) of which communication with a second network (NW2) is relayed by a relay node (NR), the method comprising steps of:
transmitting data (TD1) to be relayed to the second network toward the relay node (S3); and
acquiring, from the relay node, state change notification indicating a change in a competition state of communication by a plurality of communication nodes (Nd) connected to the first network (S5, S101).
